(19) Europäisches Patentamt / European Patent Office / Office européen des brevets

(11) **EP 4 325 173 A1**

(12) **EUROPEAN PATENT APPLICATION**
published in accordance with Art. 153(4) EPC

(43) Date of publication:
**21.02.2024 Bulletin 2024/08**

(21) Application number: **21936970.9**

(22) Date of filing: **15.04.2021**

(51) International Patent Classification (IPC):
***G01D 5/20*** (2006.01)

(52) Cooperative Patent Classification (CPC):
**G01D 5/2053**

(86) International application number:
**PCT/JP2021/015561**

(87) International publication number:
**WO 2022/219774 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **IKEDA Hiroko**
  **Tokyo 100-8310 (JP)**

• **FUJIKURA Shohei**
  **Tokyo 100-8310 (JP)**
• **MOTOYOSHI Kenta**
  **Tokyo 100-8310 (JP)**
• **HIROTANI Yu**
  **Tokyo 100-8310 (JP)**
• **SASAKI Hidenori**
  **Tokyo 100-8310 (JP)**
• **MORI Tatsuya**
  **Tokyo 100-8310 (JP)**

(74) Representative: **Hoffmann Eitle**
**Patent- und Rechtsanwälte PartmbB**
**Arabellastraße 30**
**81925 München (DE)**

(54) **RESOLVER AND ELECTRIC POWER STEERING DEVICE EQUIPPED WITH SAME**

(57) A resolver includes a rotor which is attached to a shaft of a rotating body, a stator, an excitation circuit, and an angle computation unit which is configured to compute a rotation angle of the rotor. Each of a plurality of teeth of the stator is formed having line-symmetry with respect to a line connecting a center of a core back of the stator and centers of the teeth in a circumferential direction when viewed from an axial direction. An outline of the rotor is expressed by a function Rr(x(θ), y(θ)) defined by the following Equations (1) to (3), where an x axis and a y axis are axes of an orthogonal coordinate system having a center of the shaft set as an origin, and an angle from a reference axis is θ, where a minimum distance from the center of the core back to the teeth is Ri, a maximum distance from the center of the core back to the teeth is Ro, and a number of salient poles of the rotor is Nx.

[Math. 1]

$$x(\theta) = k_1(R_o - R_i)\sin\theta + k_2(R_o - R_i)\cos N_x\theta\cos\theta \quad \cdots \ (1)$$
$$y(\theta) = k_1(R_o - R_i)\sin\theta + k_2(R_o - R_i)\cos N_x\theta\sin\theta \quad \cdots \ (2)$$
$$k_1 + k_2 \leqq 1 \quad \cdots \ (3)$$

# FIG. 3

**Description**

[Technical Field]

The present disclosure relates to a resolver and an electric power steering device equipped with the same.

[Background Art]

Patent Document 1 discloses a resolver. The resolver includes a stator and a rotor facing one another in an axial direction. A rotary shaft of a rotating body is attached to the rotor. The resolver detects a rotation angle of the rotating body utilizing change in permeance of a gap between the rotor and the stator.

[Citation List]

[Patent Document]

[Patent Document 1]
Japanese Unexamined Patent Application, First Publication No. 2007-171131

[Summary of Invention]

[PROBLEM TO BE SOLVED BY THE INVENTION]

There may be a case where at least one or both of a rotor and a stator are disposed in a manner where at least one or both of the rotor and the stator deviate from original attachment positions. In Patent Document 1, when a stator and/or a rotor is/are disposed in a manner that deviates from the original attachment position, there is a possibility that a state in which the rotor and teeth of the stator do not overlap at all, of a state in which the rotor completely covers the teeth of the stator will continue for a long time. In such a case, higher-order harmonic waves are superimposed on an output signal used for detecting a rotation angle, and an accuracy of the rotation angle declines.
The present disclosure is made in order to resolve the foregoing problems, and an object thereof is to provide a resolver capable of preventing a decline in the accuracy of detecting the rotation angle even when a rotor or a stator are disposed in a manner that deviates from original attachment positions, and an electric power steering device equipped with the same.

[MEANS TO SOLVE THE PROBLEM]

A resolver according to the present disclosure includes a rotor that is made of a magnetic body and is attached to a shaft of a rotating body, the rotor having a plurality of salient poles disposed in a circumferential direction, a stator which faces the rotor in an axial direction, the stator having an annular core back, a plurality of teeth that are made of a magnetic body and protrude from the core back towards the rotor, and an excitation winding and two-phase output windings that are wound around the plurality of teeth, the plurality of teeth being disposed in the circumferential direction, an excitation circuit that is configured to supply an excitation signal to the excitation winding, and an angle computation unit to which output signals from the two-phase output windings are input and which is configured to compute a rotation angle of the rotor based on the output signals. Each of the plurality of teeth is formed having line-symmetry with respect to a line connecting a center of the core back and centers of the teeth in the circumferential direction when viewed from the axial direction. An outline of the rotor is expressed by a function Rr(x(θ), y(θ)) defined by the following Equations (1) to (3), where an x axis and a y axis are axes of an orthogonal coordinate system having a center of the shaft set as an origin, and an angle from a reference axis is θ.

[Math. 1]

$$x(\theta) = k_1(R_o - R_i)\sin\theta + k_2(R_o - R_i)\cos N_x\theta \cos\theta \quad \cdots \, (1)$$
$$y(\theta) = k_1(R_o - R_i)\sin\theta + k_2(R_o - R_i)\cos N_x\theta \sin\theta \quad \cdots \, (2)$$
$$k_1 + k_2 \leqq 1 \quad \cdots \, (3)$$

Here, Ri is a minimum distance from the center of the core back to the teeth, Ro is a maximum distance from the center of the core back to the teeth, Nx is the number of salient poles, and $k_1$ and $k_2$ are positive numbers.

[EFFECTS OF THE INVENTION]

According to the present disclosure, it is possible to provide a resolver capable of preventing a decline in an accuracy of detecting a rotation angle even in a case where a rotor or a stator is disposed in a manner that deviates from an original attachment position, and an electric power steering device equipped with the same.

[Brief Description of Drawings]

FIG. 1 is a configuration view showing a resolver according to a first embodiment.
FIG. 2 is a block diagram showing the resolver according to the first embodiment.
FIG. 3 is a cross-sectional view taken along a line A-A of FIG. 1, and is a view that shows a resolver main body according to the first embodiment.
FIG. 4 is a view showing a rotor according to the first embodiment.
FIG. 5 is a view showing a stator according to the first embodiment.
FIG. 6 is a graph showing a distribution of the number of windings of excitation windings according to the first embodiment.
FIG. 7 is a graph showing a distribution of the number of windings of a first output winding and a second output winding according to the first embodiment.
FIG. 8 is a graph showing a change of a surface area where the rotor covers teeth of the stator, in a case where the rotor is rotated by one mechanical angle in the resolver according to the first embodiment.
FIG. 9A is a graph showing a waveform of an output signal obtained from an output winding in the resolver according to the first embodiment.
FIG. 9B is a graph showing the waveform of the output signal obtained from the output winding in the resolver according to the first embodiment.
FIG. 10 is a view showing a case where the stator deviates from an original attachment position in the resolver according to the first embodiment.
FIG. 11 is a graph showing the waveform of the output signal obtained from the output winding in a case where the stator deviates from the original attachment position in the resolver according to the first embodiment.
FIG. 12 is a block diagram showing a resolver according to a second embodiment.
FIG. 13 is a view showing a stator according to the second embodiment.
FIG. 14 is a graph showing a relationship between a phase difference between an excitation signal of a first system and the excitation signal of a second system, and an amount of deviation from 90 degrees of the phase difference between a first output signal of the first system and a second output signal of the first system, in a case where a frequency of the excitation signal of the first system and the frequency of the excitation signal of the second system are the same in the resolver according to the second embodiment.
FIG. 15 is a graph showing a relationship between the phase difference between the excitation signal of the first system and the excitation signal of the second system, and an electrical angle secondary component of an angular error, in a case where the frequency of the excitation signal of the first system and the frequency of the excitation signal of the second system are the same in the resolver according to the second embodiment.
FIG. 16 is a graph showing an example of waveforms of the excitation signal of the first system and the excitation signal of the second system in a case where the frequency of the excitation signal of the first system and the frequency of the excitation signal of the second system are made to be different in the resolver according to the second embodiment.
FIG. 17 is a graph showing effects of the excitation signal of the second system on the output signal of the first system in a case where the frequency of the excitation signal of the first system and the frequency of the excitation signal of the second system are made to be different in the resolver according to the second embodiment.
FIG. 18 is a graph showing the effects of the output signal of the second system on the excitation signal of the first system in a case where the frequency of the excitation signal of the first system and the frequency of the excitation signal of the second system are made to be different in the resolver according to the second embodiment.
FIG. 19 is a view showing a stator according to a third embodiment.
FIG. 20 is a view showing a stator according to a fourth embodiment.
FIG. 21 is a side view of a resolver main body according to a fifth embodiment.
FIG. 22 is a view showing a first output winding board according to the fifth embodiment.
FIG. 23 is a graph showing a distribution of thicknesses of copper wires of first output windings according to the fifth embodiment.

FIG. 24 is a cross-sectional view taken along a line C-C of FIG. 5, and is a view that shows teeth according to a sixth embodiment.

FIG. 25 is a view showing teeth according to a seventh embodiment.

FIG. 26 is a schematic diagram of an electric power steering device according to a ninth embodiment.

[Description of Embodiments]

First Embodiment

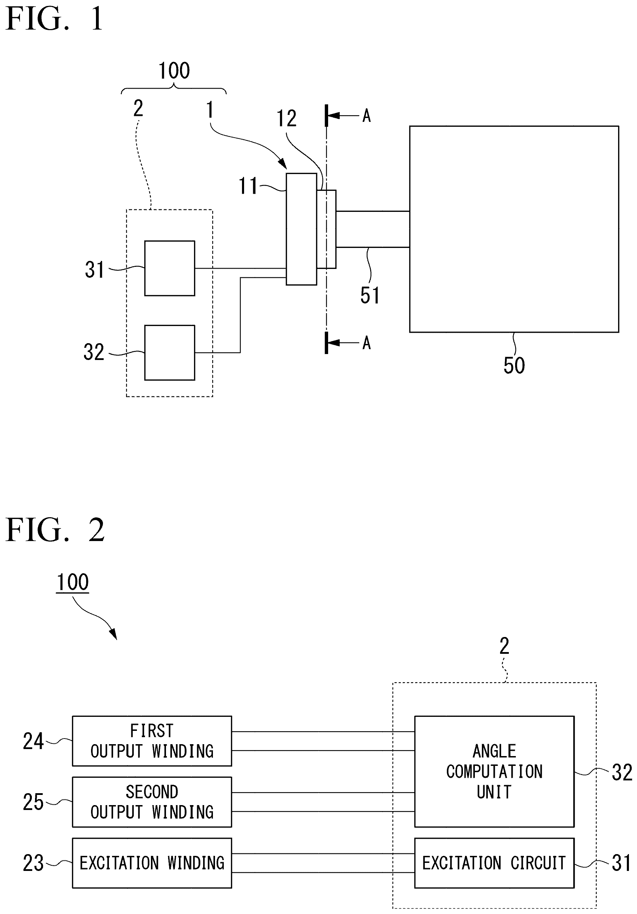

FIG. 1 is a configuration view showing a resolver 100 according to a first embodiment. FIG. 2 is a block diagram showing the resolver 100 according to the first embodiment.

FIG. 1 shows a state in which the resolver 100 is attached to a shaft 51 that is a rotary shaft of a rotating body of a rotary electric machine 50. An attachment target of the resolver 100 is not limited to the shaft 51 of the rotary electric machine 50. It is possible to attach the resolver 100 to a rotary shaft of a rotating body of various devices.

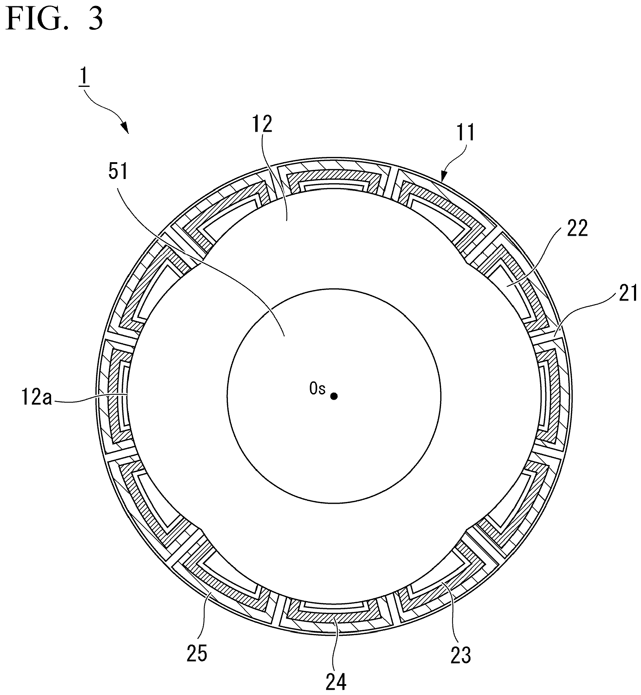

In this description, a direction along a shaft center Os of the shaft 51 (refer to FIG. 3) is referred to as an "axial direction". In a cross-section perpendicular to the axial direction, a direction intersecting the shaft center Os is referred to as a "radial direction", and a direction revolving around the shaft center Os is referred to as a "circumferential direction".

The resolver 100 includes a resolver main body 1 that is a sensor, and a control device 2 that controls the resolver main body 1.

FIG. 3 is a cross-sectional view taken along a line A-A of FIG. 1, and is a view that shows the resolver main body 1 according to the first embodiment. As shown in FIGs. 1 and 3, the resolver main body 1 includes a pair made of a stator 11 and a rotor 12. The stator 11 and the rotor 12 are disposed such as to face one another in the axial direction.

The rotor 12 is made of a magnetic body. The rotor 12 is attached to the shaft 51 of the rotary machine 50. The rotor 12 is fixed to the shaft 51 by press-fitting, shrink-fitting, screw fastening, or the like. The rotor 12 is connected to the rotating body of the rotary electric machine 50 with the shaft 51 therebetween. The rotor 12 rotates integrally with the rotating body of the rotary electric machine 50.

The rotor 12 has a plurality of salient poles 12a disposed in the circumferential direction. In the first embodiment, a number Nx (here, Nx is a natural number greater than or equal to two) of the salient poles 12a is four. The number Nx of the salient poles 12a however is not limited to four. The number Nx of the salient poles 12a is also referred to as an "axial double angle".

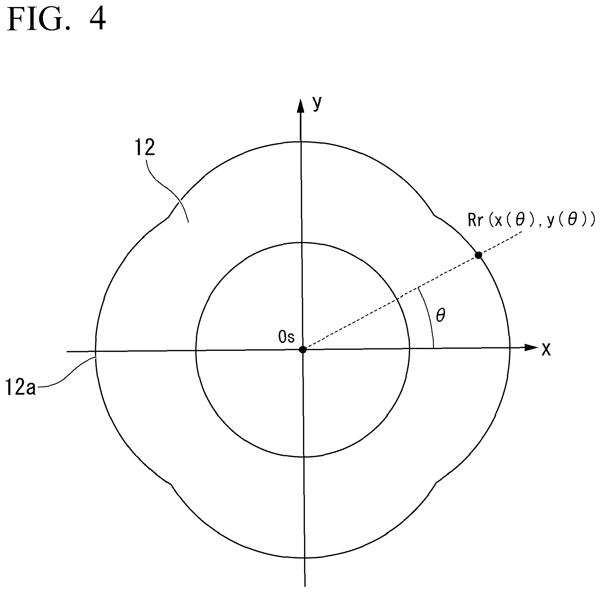

An external shape of the rotor 12 is explained with reference to FIG. 4.

FIG. 4 is a view of the rotor 12 viewed in the axial direction shown by an x axis and a y axis of an orthogonal coordinate system having the shaft center Os of the shaft 51 set as the origin. As shown in FIG. 4, an angle from a reference axis (for example, a positive direction of the x axis) is $\theta$. At this time, an outline (external shape) of the rotor 12 is expressed by a function $Rr(x(\theta), y(\theta))$ defined by the following Equations (1) to (3). $Ri$ is a minimum distance from a center Ocb of a core back 21 (which is described below) to teeth 22, and $Ro$ is a maximum distance from the center Ocb of the core back 21 to the teeth 22. Nx is the number of the salient poles 12a. In addition, $k_1$ and $k_2$ are positive numbers.

[Math. 2]

$$x(\theta) = k_1(R_o - R_i)\sin\theta + k_2(R_o - R_i)\cos N_x\theta \cos\theta \quad \cdots \quad (1)$$
$$y(\theta) = k_1(R_o - R_i)\sin\theta + k_2(R_o - R_i)\cos N_x\theta \sin\theta \quad \cdots \quad (2)$$
$$k_1 + k_2 \leqq 1 \quad \cdots \quad (3)$$

It is more preferable that the outline of the rotor 12 be formed such that the following Equation (4) is satisfied.

$$k_1 + k_2 < 1 \ ... \ (4)$$

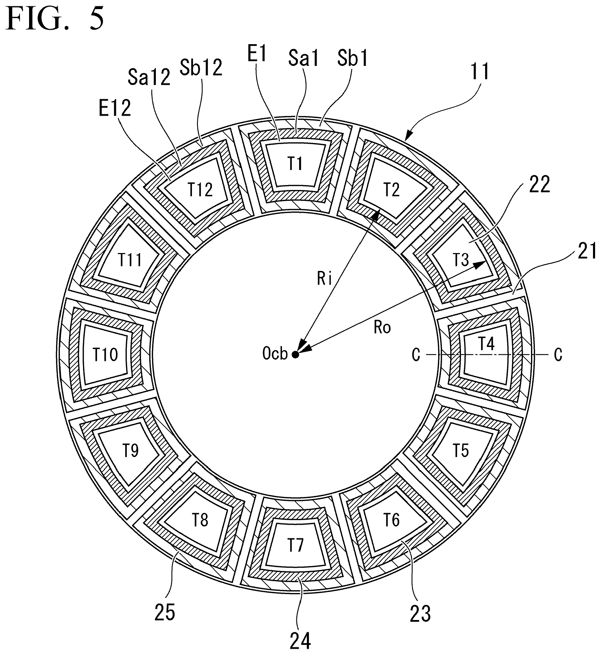

The stator 11 is explained with reference to FIG. 5.

The stator 11 includes the core back 21, a plurality of teeth 22, excitation windings 23, first output windings 24, and second output windings 25.

The core back 21 and the plurality of teeth 22 are made of magnetic bodies. The core back 21 and the plurality of teeth 22 configure an iron core of the stator 11.

The core back 21 has an annular shape about the center Ocb.

The plurality of teeth 22 protrude from the core back 21 toward the rotor 12 side.

The core back 21 and the plurality of teeth 22 may be integrally provided. The core back 21 and the plurality of teeth 22 may be separate bodies.

In the first embodiment, the number Ns (where Ns is a natural number) of the teeth 22 is twelve. However, the number Ns of the teeth 22 is not limited to twelve.

Hereinafter, as shown in FIG. 5, the plurality of teeth 22 are also referred to as teeth T1 to T12 moving clockwise.

The teeth 22 are disposed with an interval therebetween in the circumferential direction. The plurality of teeth 22 are disposed at equal intervals in the circumferential direction. The teeth 22 have the same shape as one another.

Each of teeth 22 is formed into an arc shape having a thickness in the radial direction when viewed from the axial direction. Specifically, when viewed from the axial direction, an inner circumferential surface of each of teeth 22 is an arc having the radius Ri with the center Ocb of the core back 21 as the center, and an outer circumferential surface of each of teeth 22 is an arc having the radius Ro (here, Ri<Ro) with the center Ocb as the center. That is, the inner circumferential surface of teeth 22 is positioned on an imaginary circle having the radius Ri with the center Ocb as the center. An outer circumferential surface of the teeth 22 is positioned on an imaginary circle having the radius Ro with the center Ocb as the center. Two side surfaces (surfaces facing the circumferential direction) of the teeth 22 are positioned on a straight line extending in the radial direction from the center Ocb.

The minimum distance from the center Ocb to the teeth 22 becomes the distance Ri from the center Ocb to the inner circumferential surface of each of the teeth 22, and the maximum distance from the center Ocb to the teeth 22 becomes the distance Ro from the center Ocb to the outer circumferential surface of each of the teeth 22. The teeth 22 have line-symmetry with respect to a line connecting the center Ocb and centers of the teeth 22 in the circumferential direction.

The shapes of the teeth 22 are not limited to arc shapes. The teeth 22 may have any an arbitrary shape, so long as the minimum distance from the center Ocb to the teeth 22 is Ri, the maximum distance from the center Ocb to the teeth 22 is Ro, and the teeth 22 have line-symmetry with respect to the line connecting the center Ocb and the centers of the teeth 22 in the circumferential direction.

The excitation windings 23, the first output windings 24, and the second output windings 25 are wound around the plurality of teeth 22. That is, a winding group made up of the single-phase excitation windings 23 and the two-phase output windings 24 and 25 is wound around the plurality of teeth 22. The excitation windings 23, the first output windings 24, and the second output windings 25 are configured of coils.

The iron core (the core back 21 and the teeth 22) of the stator 11, the excitation windings 23, the first output windings 24, and the second output windings 25 are insulated using insulating paper, coating, resin, or the like that is not shown.

First, the excitation windings 23 are wound around the teeth 22, after which the first output windings 24 and the second output windings 25 are wound thereupon in such an order. The order of winding the first output windings 24 and the second output windings 25 is not limited to such an order, and either of the windings 24 or the windings 25 may be wound first.

Hereinafter, the excitation winding 23 wound around each of teeth Ti (i=1 to 12) is also referred to as "Ei", the first output winding 24 is referred to as "Sai", and the second output winding 25 is referred to as "Sbi". That is, excitation windings E1 to E12, first output windings Sa1 to Sa12 and second output windings Sb1 to Sb12 are wound around the teeth T1 to T12, respectively.

The excitation windings E1 to E12 are connected in series. The first output windings Sa1 to Sa12 are connected in series. The second output windings Sb1 to Sb12 are connected in series.

The excitation windings E1 to E12 are wound around in order from the teeth T1 to T12. The first output windings Sa1 to Sa12 are wound around in order from the teeth T1 to T12. The second output windings Sb1 to Sb12 are wound around in order from the teeth T1 to T12.

The present disclosure is not limited to the above, and it is possible to select an arbitrary tooth Ti out of the teeth as the first tooth 22 to be wound. In this case, the excitation windings E1 to E12, the first output windings Sa1 to Sa12 and the second output windings Sb1 to Sb12 may be sequentially connected in series from the arbitrary tooth Ti out of the teeth to be wound first, to an adjacent tooth. In addition, the order of winding the excitation windings E1 to E12, the first output windings Sa1 to Sa12 and the second output windings Sb1 to Sb12 around the teeth T1 to T12 maybe changed.

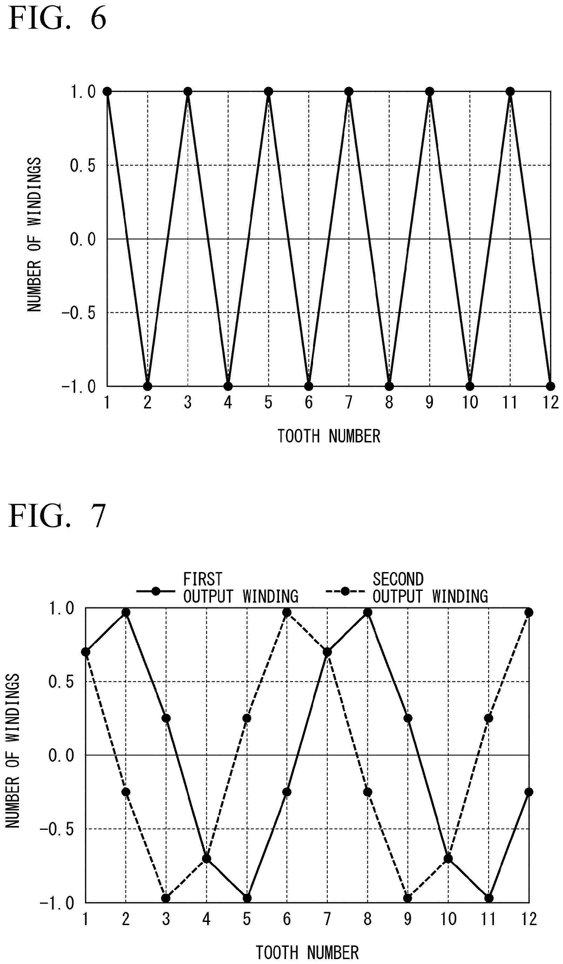

The number of windings of the excitation windings 23 is explained with reference to FIG. 6. FIG. 6 shows a distribution of the numbers of windings of the excitation windings 23. That is, FIG. 6 consecutively shows the numbers of windings of the excitation windings E1 to E12 wound around the teeth T1 to T12. In FIG. 6, the vertical axis indicates the numbers of windings of the excitation windings 23, which are normalized by an amplitude of the number of windings. The horizontal axis indicates the number i of the tooth Ti out of the teeth.

Here, in the excitation windings 23, a positive winding direction and a negative winding direction are defined. For example, if a winding direction of a certain excitation winding 23 is the positive winding direction, the winding direction of the excitation winding 23 wound in an opposite direction to the winding direction of such an excitation winding 23 becomes the negative winding direction. The number of windings in the positive winding direction and the number of windings in the negative winding direction have the same absolute value. That is, if the number of windings in the positive winding direction is a positive X times, the number of windings in the negative winding direction becomes a negative X times.

In the first embodiment, the excitation windings 23 in the positive winding direction and the excitation windings 23 in the negative winding direction are alternately disposed. That is, six excitation windings 23 in the positive winding direction and six excitation windings 23 in the negative winding direction are alternately disposed in twelve of the teeth 22. Therefore, a spatial order Ne of the excitation windings 23 becomes six.

Disposition of the excitation windings 23 is not limited to the above, and the excitation windings 23 may be differently disposed. For example, the excitation windings 23 in the positive winding direction and the excitation windings 23 in the negative winding direction may be alternately disposed for every two of the teeth 22. In this case, the spatial order Ne of the excitation windings 23 becomes three.

The number of windings of the first output windings 24 and the second output windings 25 is described with reference to FIG. 7. FIG. 7 shows a distribution of the numbers of windings of the first output windings 24 and the second output windings 25. That is, FIG. 7 consecutively shows the numbers of windings of the first output windings Sa1 to Sa12 and the second output windings Sb1 to Sb12 wound around the teeth T1 to T12. In FIG. 7, the vertical axis indicates the numbers of windings of the first output windings 24 and the second output windings 25, which are normalized by an amplitude ($N_1$, which is described below) of the number of windings. The horizontal axis indicates the number i of the tooth Ti out of the teeth.

The phase difference between a number Nsai of the windings of the first output winding Sai and a number $N_{Sbi}$ of the windings of the second output winding Sbi wound around the ith tooth Ti is 90 degrees. The number Nsai of the windings of the first output winding Sai and the number $N_{Sbi}$ of the windings of the second output winding Sbi wound around the ith tooth Ti is expressed by the following Equation (5). In Equation (5), Ni indicates amplitudes of the numbers of the windings of the output windings 24 and 25, $\theta_{teeth}$ indicates a position of the tooth Ti out of the teeth in the circumferential direction. Ne indicates the spatial order of the excitation windings 23, Nx indicates the number of the salient poles 12a (the axial double angle of the rotor 12), and Ns indicates the number of teeth 22.

[Math. 3]

$$
\left.
\begin{aligned}
N_{Sai} &= N_1 \cos\left\{ \left| N_e \pm N_x \right| \frac{1}{N_s} 2(i-1)\pi + \theta_{teeth} + \alpha \right\} \\
N_{Sbi} &= N_1 \cos\left\{ \left| N_e \pm N_x \right| \frac{1}{N_s} 2(i-1)\pi + \theta_{teeth} + \beta \right\} \\
\left| \alpha - \beta \right| &= 90°
\end{aligned}
\right\} \cdots (5)
$$

As indicated in Equation (5), the numbers $N_{Sai}$ and $N_{Sbi}$ of windings of the output windings 24 and 25 are distributed in a sinusoidal fashion in the circumferential direction of the teeth 22. When the numbers $N_{Sai}$ and $N_{Sbi}$ of the windings of the output windings 24 and 25 obtained by the foregoing Equation (5) become decimals, the actual numbers of windings of the output windings 24 and 25 become integer values obtained by rounding off the numbers $N_{Sai}$ and $N_{Sbi}$ of windings.

Since the spatial order Ne of the excitation windings 23 is six and the axial double angle Nx of the rotor 12 is four, the spatial orders of the output windings 24 and 25 becomes two.

Returning to FIG. 2, the control device 2 is described. The control device 2 includes an excitation circuit 31 and an angle computation unit 32.

The excitation windings 23 are connected to the excitation circuit 31. The excitation windings 23 are connected to the excitation circuit 31 through excitation terminals (not shown) provided in an extention portion (not shown) of the stator 11. The excitation circuit 31 supplies an excitation signal to the excitation windings 23. Specifically, the excitation circuit 31 applies an AC voltage to the excitation winding 23 and excites the excitation winding 23.

The first output windings 24 and the second output windings 25 are connected to the angle computation unit 32. The first output windings 24 and the second output windings 25 are connected to the angle computation unit 32 through output terminals (not shown) provided in the extention portion of the stator 11. Output signals from the first output windings 24 and the second output windings 25 are input to the angle computation unit 32. The angle computation unit 32 computes a rotation angle of the rotor 12 based on the output signals from the first output windings 24 and the second output windings 25. Hereinafter, the rotation angle of the rotor 12 computed by the angle computation unit 32 is also referred to as a "detection angle" of the rotor 12.

Operation of the resolver 100 according to the first embodiment having the configuration described above is explained.

If the excitation signal is supplied from the excitation circuit 31 to the excitation windings 23, magnetic flux is generated in a gap between the rotor 12 and the stator 11 due to an AC excitation current flowing in the excitation windings 23. The magnetic flux interlinks with each of the first output windings 24 and the second output windings 25 wound around the teeth 22, and a voltage is generated in the first output windings 24 and the second output windings 25. If the rotor 12 rotates, surface areas of the teeth 22 of the stator 11 covered by the rotor 12 change, and a permeance of the gap between the rotor 12 and the stator 11 changes. For this reason, voltages generated in the first output windings 24 and the second output windings 25 (that is, first and second output signals obtained from the first output windings 24 and the second output windings 25) also change. The angle computation unit 32 computes the detection angle of the rotor 12 utilizing the change in the output signals obtained from the output windings 24 and 25. Accordingly, the resolver 100 detects the rotation angle of the rotating body of the rotary electric machine 50.

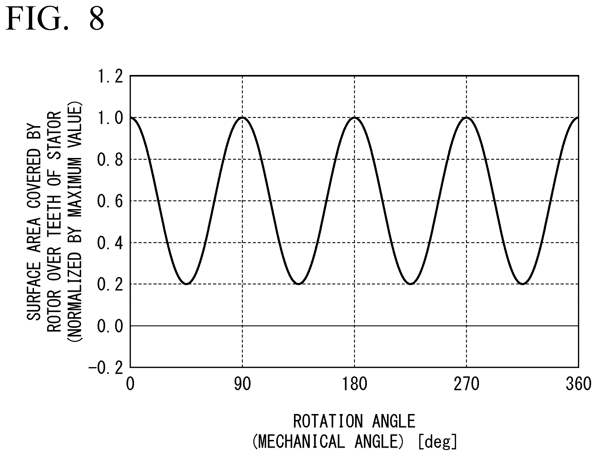

Referring to FIG. 8, change in surface area covered by the rotor 12 over the teeth 22 of the stator 11 is described in detail. FIG. 8 shows change in surface area covered by the rotor 12 over the teeth 22 of the stator 11 when the rotor 12 is rotated by one mechanical angle, with an angle θ=0 degrees as a reference. In FIG. 8, the vertical axis indicates the surface areas of the teeth 22, which are normalized by a maximum value. The horizontal axis indicates the rotation angles (mechanical angles) of the rotor 12.

In the first embodiment, since the outline of the rotor 12 is formed such that Equations (1) to (3) are satisfied, as shown in FIG. 8, when the rotor 12 is rotated by one mechanical angle, the surface area covered by the rotor 12 over the the teeth 22 of the stator 11 change to sinusoidal shapes.

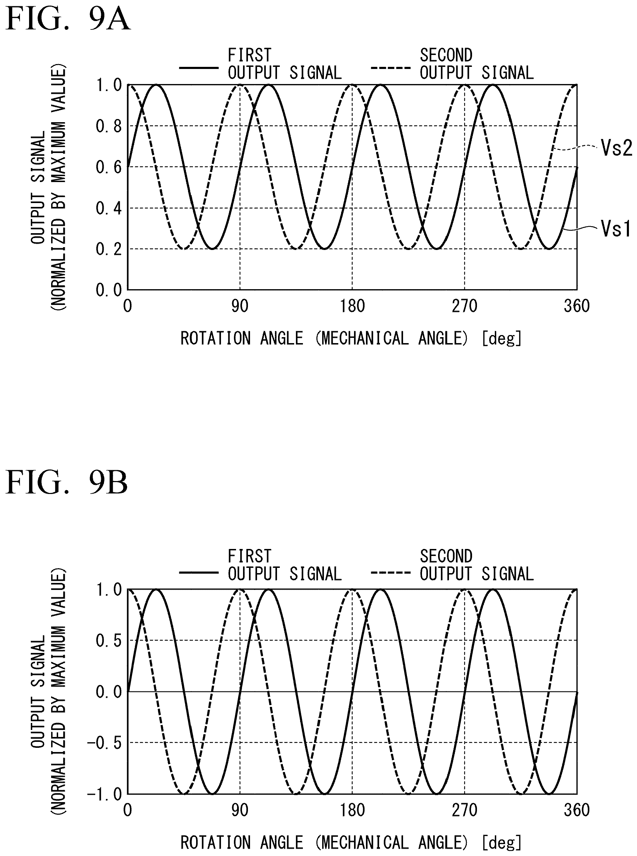

FIGs. 9A and 9B show waveforms of the first and the second output signals obtained from the first output windings 24 and the second output windings 25. FIG. 9A shows the waveforms of the output signals that are not subject to any processing, and FIG. 9B shows the waveforms obtained by correcting offset components of the output signals. In FIGs. 9A and 9B, the vertical axis indicates the output signals, which are normalized by the maximum value of the output signals. The horizontal axis indicates the rotation angles (mechanical angles) of the rotor 12.

In the first embodiment, as described above, when the rotor 12 is rotated by one mechanical angle, the surface areas covered by the rotor 12 over of the teeth 22 of the stator 11 change to sinusoidal shapes. Therefore, as shown in FIGs. 9A and 9B, when the rotor 12 is rotated by one mechanical angle, both the first output signals obtained by the first output windings 24, and the second output signals obtained by the second output windings 25 have sinusoidal shapes.

The angle computation unit 32 computes a detection angle θr of the rotor 12 using the following Equation (6) based on first output signals $V_{s1}$ obtained by the first output windings 24, and second output signals $V_{s2}$ obtained by the second output windings 25.

[Math. 4]

$$\theta_r = \tan^{-1} \frac{V_{s1}}{V_{s2}} \quad \cdots \quad (6)$$

In the resolver 100 according to the first embodiment, since the outline of the rotor 12 is formed such that Equations (1) to (3) are satisfied, the surface areas covered by the rotor 12 over of the teeth 22 of the rotor 11 change to sinusoidal shapes. In addition, both the first output signals obtained by the first output windings 24 and the second output signals obtained by the second output windings 25 also have a sinusoidal shape. The angle computation unit 32 computes the detection angle θr of the rotor 12 based on the first and second output signals having a sinusoidal shape. Therefore, the difference betwteen the detection angle θr of the rotor 12 computed by the angle computation unit 32 and the actual rotation angle of the rotor 12 decreases, and thus the accuracy of detecting the rotation angle by the resolver 100 becomes favorable.

A case where the stator 11 and/or the rotor 12 is/are disposed in a manner that deviates from an original attachment position may exist.

In resolvers of the related art, when a stator and/or a rotor is/are disposed in a manner that deviates from the original attachment position, there is a possibility that a state in which the rotor and the teeth of the stator do not overlap at all, or a state in which the rotor completely covers the teeth of the stator continues for a long time. In such a state, since the maximum value and the minimum value of the output signals obtained from output windings become flat, higher-order harmonic waves are superimposed on the output signals and they do not become sinusoidal in shape. As a result, the accuracy of detecting the rotation angle declines.

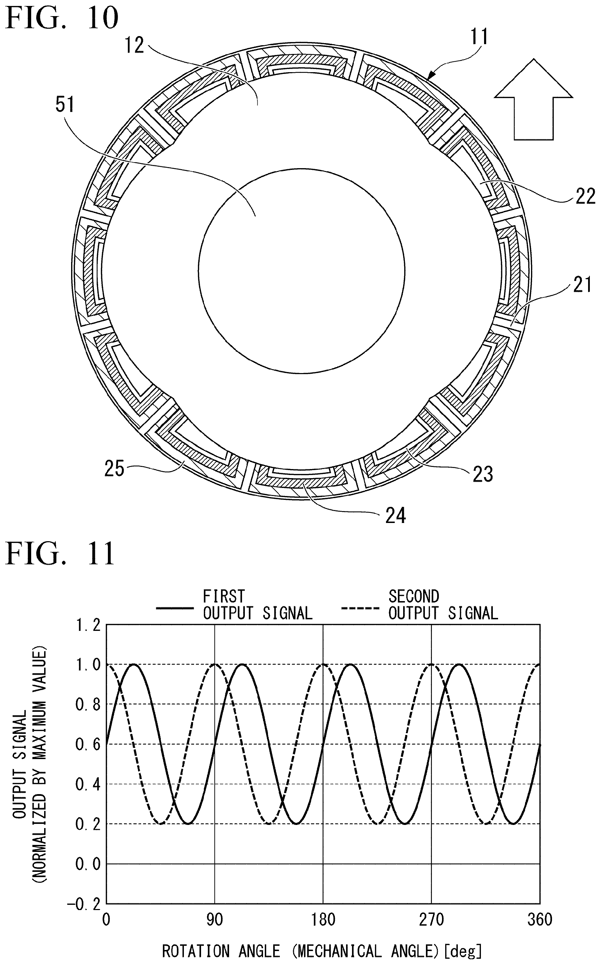

In the first embodiment, a behavior of the resolver 100 when the stator 11 and/or the rotor 12 is/are disposed in a manner that deviates from the original attachment position is described with reference to FIGs. 10 and 11. FIG. 10 is a view showing a case in which the attachment position of the stator 11 has deviated in the direction of the arrow shown in the figure. In addition, FIG. 11 shows the waveforms of the first and second output signals obtained from the first output windings 24 and the second output windings 25 in the case of FIG. 10. In FIG. 11, the vertical axis indicates the output signals, which are normalized by the maximum value of the output signals. The horizontal axis indicates the rotation angles (mechanical angles) of the rotor 12.

In the resolver 100 according to the first embodiment, the outline of the rotor 12 is formed such that Equations (1) to (3) are satisfied. Therefore, even when the attachment position of the stator 11 has deviated, the surface areas covered by the rotor 12 over of the teeth 22 of the rotor 11 change into sinusoidal shapes. That is, even when the attachment position of the stator 11 has deviated, it is possible to prevent a state in which the rotor 12 and the teeth 22 of the stator 11 do not overlap at all of a state in which the rotor 12 completely covers the teeth 22 of the stator 11 continously from occuring. Therefore, as shown in FIG. 11, higher-order harmonic waves are not superimposed on the first and second output signals obtained from the first output windings 24 and the second output windings 25 so that the first and second output signals have a sinusoidal shape.

Even when the attachment position of the stator 11 has deviated, the angle computation unit 32 can compute the detection angle θr of the rotor 12 based on the first and second output signals having a sinusoidal shape. Therefore, even when the attachment position of the stator 11 has deviated, the accuracy of detecting the rotation angle becomes favorable, that is, it is possible to prevent a decline in the accuracy of detecting the rotation angle.

FIGs. 10 and 11 show behaviors of the resolver 100 when the attachment position of the stator 11 deviates. However,it is possible to achieve similar effects even in cases when the center of rotation of the rotor 12 deviates, that shaft 51 tilts, or a combination thereof or the like, or in cases of deviation during manufacturing, or various deviations that results from usage.

In other words, in the resolver 100 according to the first embodiment, even when the rotor 12 or the stator 11 is disposed in a manner that deviates from the original attachment position, it is possible to prevent the decline in the accuracy of detecting the rotation angle. Therefore, it is possible to achieve the resolver 100 has a favorable robustness.

In addition, in the first embodiment, the outline of the rotor 12 is formed such that Equation (4) is further satisfied. Accordingly, when the stator 11 and/or the rotor 12 is/are disposed in a manner that deviates from the original attachment position, it is possible to prevent a state in which the rotor 12 and the teeth 22 of the stator 11 do not overlap at all or a state in which the rotor 12 completely covers the teeth 22 of the stator 11 continously from occuring more reliably . Therefore, it is possible to further prevent the decline in the accuracy of detecting the rotation angle reliably.

In addition, the core back 21 and the teeth 22 are made of magnetic bodies. Accordingly, the amounts of the first and second output signals obtained from the first output windings 24 and the second output windings 25 increase so that it is possible to improve noise resistance.

In addition, the teeth 22 are formed into an arc shape having line-symmetry with respect to a line connecting the center Ocb of the core back 21 and the centers of the teeth 22 in the circumferential direction. From such a configuration, when the rotor 12 is rotated, since it is possible for the first and second output signals obtained from the first output windings 24 and the second output windings 25 to have a sinusoidal shape, it is possible to further improve the accuracy of detecting the rotation angle.

Second Embodiment

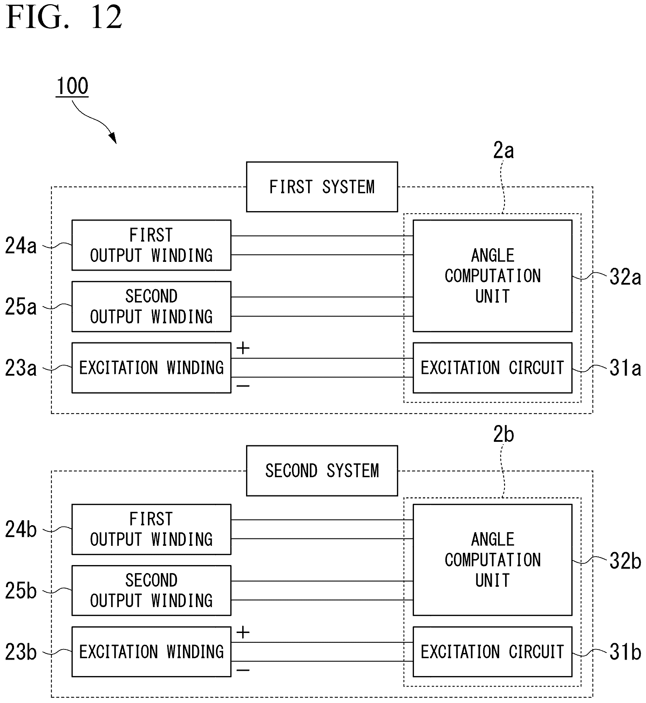

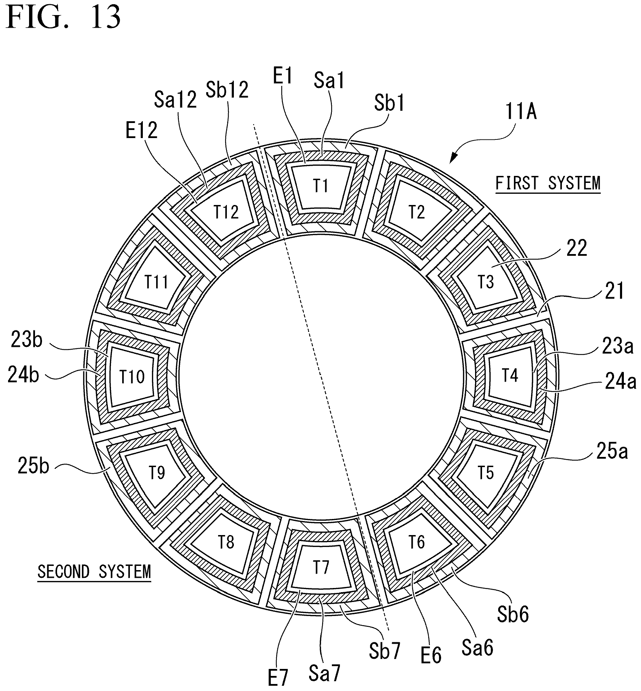

FIG. 12 is a block diagram showing the resolver 100 according to a second embodiment. FIG. 13 is a view showing a stator 11A according to the second embodiment. The same reference signs are applied to configuring components having functions and operations similar to those of the first embodiment, and explanations thereof are omitted.

As shown in FIGs. 12 and 13, in the resolver 100 according to the second embodiment, detection of a rotation angle is performed by two systems, that is, a first system and a second system. In other words, the resolver 100 is a redundant resolver having properties of redundancy.

The resolver 100 according to the second embodiment includes the stator 11A, the rotor 12, a control device 2a of the first system, and a control device 2b of the second system.

As shown in FIG. 13, the stator 11A includes the core back 21, the plurality of teeth 22, excitation windings 23a of the first system, first output windings 24a of the first system, second output windings 25a of the first system, excitation windings 23b of the second system, first output windings 24b of the second system, and second output windings 25b of the second system.

Similar to the first embodiment, in the second embodiment, the number Ns of the teeth 22 is twelve. Hereinafter, the plurality of teeth 22 are also referred to as the teeth T1 to T12 moving clockwise. As shown in FIG. 13, the plurality of teeth 22 are divided into a teeth group of the first system made up of the teeth T1 to T6 and a teeth group of the second system made up of the teeth T7 to T12 in the circumferential direction.

The excitation windings 23a of the first system, the first output windings 24a of the first system, and the second output windings 25a of the first system are wound around the teeth 22 (the teeth T1 to T6) of the teeth group of the first system. The iron core (the core back 21 and the teeth 22) of the stator 11A, the excitation windings 23a of the first system, the first output windings 24a of the first system, and the second output windings 25a of the first system are insulated using insulating paper, coating, resin, or the like (not shown).

First, the excitation windings 23a of the first system are wound around the teeth 22, after which the first output windings 24a of the first system and the second output windings 25a of the first system are wound thereupon in such an order. The order of winding of the first output windings 24a of the first system and of the second output windings 25a of the first system is not limited to such an order, and either of the first output windings 24a of the first system or the second output windings 25a of the first system may be wound first.

Hereinafter, the excitation winding 23a of the first system wound around the tooth Ti (i=1 to 6) is also referred to as the "excitation winding Ei of the first system", the first output winding 24a of the first system is also referred to as the "first output winding Sai of the first system", and the second output winding 25a of the first system is also referred to as the "second output winding Sbi of the first system".

The excitation windings E1 to E6 of the first system are connected in series. The first output windings Sa1 to Sa6 of the first system are connected in series. The second output windings Sb1 to Sb6 of the first system are connected in series.

The excitation windings E1 to E6 of the first system are wound around in order from the teeth T1 to T6. The first output windings Sa1 to Sa6 of the first system are wound around in order from the teeth T1 to T6. The second output windings Sb1 to Sb6 of the first system are wound around in order from the teeth T1 to T6.

Furthermore, the present disclosure is not limited to the above, and it is possible to select an arbitrary tooth Ti as the first tooth out of the teeth 22 to be wound first. In addition, the order of winding the excitation windings E1 to E6 of the first system, the first output windings Sa1 to Sa6 of the first system, and the second output windings Sb1 to Sb6 of the first system around the teeth T1 to T6 may be changed.

The excitation windings 23b of the second system, the first output windings 24b of the second system, and the second output windings 25b of the second system are wound around the teeth 22 (the teeth T7 to T12) of the teeth group of the second system. The iron core of the stator 11A, the excitation windings 23b of the second system, the first output windings 24b of the second system, and the second output windings 25b of the second system are insulated using insulating paper, coating, resin, or the like (not shown).

First, the excitation windings 23b of the second system are wound around the teeth 22, after which the first output windings 24b of the second system and the second output windings 25b of the second system are wound thereupon in such an order. The order of winding of the first output windings 24b of the second system and of the second output windings 25b of the second system is not limited to such an order, and either of the first output windings 24b of the second system or the second output windings 25b of the second system may be wound first.

Hereinafter, the excitation winding 23b of the second system wound around the tooth Ti (i=7 to 12) is also referred to as the "excitation winding Ei of the second system", the first output winding 24b of the second system is also referred to as the "first output winding Sai of the second system", and the second output winding 25b of the second system is also referred to as the "second output winding Sbi of the second system".

The excitation windings E7 to E12 of the second system are connected in series. The first output windings Sa7 to Sa12 of the second system are connected in series. The second output windings Sb7 to Sb12 of the second system are connected in series.

The excitation windings E7 to E12 of the second system are wound around in order from the teeth T7 to T12. The first output windings Sa7 to Sa12 of the second system are wound around in order from the teeth T7 to T12. The second output windings Sb7 to Sb12 of the second system are wound around in order from the teeth T7 to T12.

Furthermore, the present disclosure is not limited to the above, and it is possible to select an arbitrary tooth Ti as the first tooth out of the teeth 22 to be wound first. In addition, the order of winding the excitation windings E7 to E12 of the second system, the first output windings Sa7 to Sa12 of the second system, and the second output windings Sb7 to Sb12 of the second system around the teeth T7 to T12 may be changed.

As shown in FIG. 12, the control device 2a of the first system includes an excitation circuit 31a of the first system and an angle computation unit 32a of the first system.

The excitation windings 23a of the first system are connected to the excitation circuit 31a of the first system. The excitation circuit 31a of the first system supplies an excitation signal of the first system to the excitation windings 23a of the first system.

The first output windings 24a of the first system and the second output windings 25a of the first system are connected to the angle computation unit 32a of the first system. Output signals of the first system from the first output windings 24a of the first system and the second output windings 25a of the first system are input to the angle computation unit 32a of the first system. The angle computation unit 32a of the first system computes the rotation angle of the rotor 12 (a detection angle of the first system) based on the output signals of the first system from the first output windings 24a of the first system and the second output windings 25a of the first system.

The control device 2b of the second system includes an excitation circuit 31b of the second system and an angle computation unit 32b of the second system.

The excitation windings 23b of the second system are connected to the excitation circuit 31b of the second system. The excitation circuit 31b of the second system supplies an excitation signal of the second system to the excitation windings 23b of the second system.

The first output windings 24b of the second system and the second output windings 25b of the second system are connected to the angle computation unit 32b of the second system. Output signals of the second system from the first output windings 24b of the second system and the second output windings 25b of the second system are input to the angle computation unit 32b of the second system. The angle computation unit 32b of the second system computes the rotation angle of the rotor 12 (a detection angle of the second system) based on the output signals of the second system from the first output windings 24b of the second system and the second output windings 25b of the second system.

In the resolver 100 according to the second embodiment, the plurality of teeth 22 are split in the circumferential direction and configure the teeth group of the first system and the teeth group of the second system, respectively. In addition, the excitation circuit 31a of the first system and the angle computation unit 32a of the first system that corresponds to the teeth group of the first system, and the excitation circuit 31b of the second system and the angle computation unit 32b of the second system that corresponds to the teeth group of the second system are provided independently from one another.

Therefore, in the resolver 100 according to the second embodiment, it is possible to ensure redundancy. That is, even when one system of the resolver 100 breaks down, it is possible to detect the rotation angle using the other system.

Hereinafter, in the second embodiment, setting of frequencies of the excitation signal of the first system from the excitation circuit 31a of the first system and the excitation signal of the second system from the excitation circuit 31b of the second system is explained.

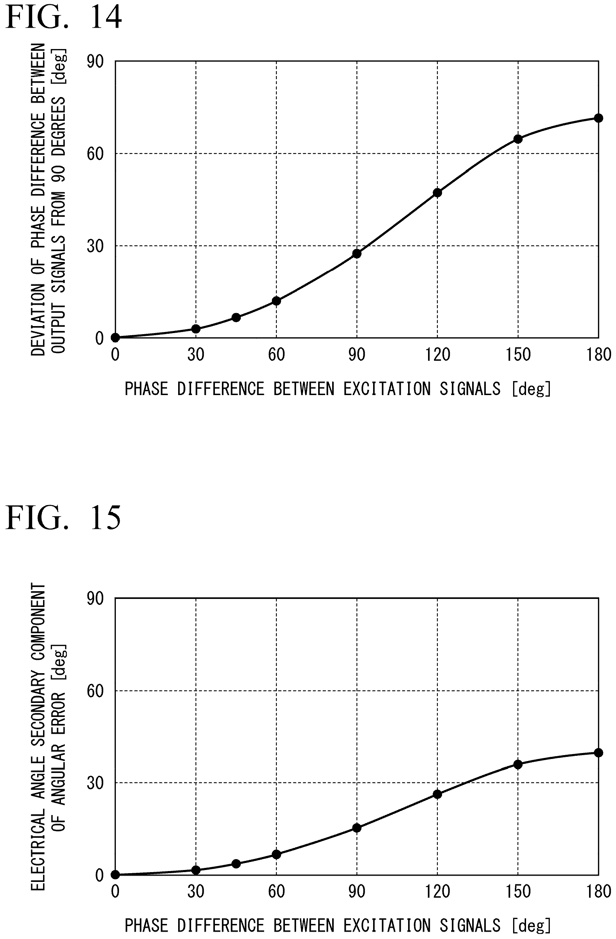

The frequency of the excitation signal of the first system from the excitation circuit 31a of the first system and the frequency of the excitation signal of the second system from the excitation circuit 31b of the second system may be the same. The relationship between a phase difference between the excitation signal of the first system and the excitation signal of the second system in this case, and the accuracy of detecting the rotation angle is described with reference to FIGs. 14 and 15.

FIG. 14 shows a relationship between a phase difference between the excitation signal of the first system and the excitation signal of the second system, and an amount of deviation of the phase difference between the first output signal of the first system and the second output signal of the first system from 90 degrees when the frequency of the excitation signal of the first system and the frequency of the excitation signal of the second system are the same. The excitation circuit 31a of the first system and the excitation circuit 31b of the second system are independent from one another. In FIG. 14, the horizontal axis indicates the phase differences between the excitation signal of the first system and the excitation signal of the second system. The vertical axis indicates the amounts of deviation of the phase difference between the first output signal of the first system and the second output signal of the first system from 90 degrees.

FIG. 15 shows a relationship between a phase difference between the excitation signal of the first system and the excitation signal of the second system, and an electrical angle secondary component of an angular error when a frequency of the excitation signal of the first system and a frequency of the excitation signal of the second system are the same. The angular error denotes a difference between a true value of an angle of a magnetic pole of the rotary electric machine 50 and the detection angle computed by the angle computation unit 32a of the first system. In addition, the excitation circuit 31a of the first system and the excitation circuit 31b of the second system are independent from one another. In FIG. 15, the horizontal axis indicates the phase differences between the excitation signal of the first system and the excitation signal of the second system. The vertical axis indicates the electrical angle secondary component of the angular error.

As shown in FIG. 14, when the phase difference between the excitation signal of the first system and the excitation signal of the second system is zero, the phase difference between the first output signal of the first system and the second output signal of the first system becomes 90 degrees. At this time, as shown in FIG. 15, it is ascertained that the electrical angle secondary component of the angular error also becomes zero so that it is possible to most accurately detect the rotation angle.

In addition, if the phase difference between the excitation signal of the first system and the excitation signal of the second system increases, the phase difference between the first output signal of the first system and the second output signal of the first system diverges from 90 degrees. At this time, it is ascertained that the electrical angle secondary component of the angular error also increases, and the accuracy of detecting the rotation angle declines.

In FIGs. 14 and 15, an output signal in the first system and the angular error are described, and the same applies to the second system.

If the electrical angle secondary component of the angular error increases, there is a possibility that a torque ripple will increase. Therefore, it is desirable to reduce the angular error in order to curb occurrence of a torque ripple.

Hence, when excitation signals having the same frequency are used in the excitation circuit 31a of the first system and the excitation circuit 31b of the second system, it is desirable to reduce the phase difference between the excitation signal of the first system and the excitation signal of the second system as much as possible in order to reduce the angular error. For example, it is possible to reduce the phase difference between the excitation signal of the first system and the excitation signal of the second system by synchronizing the excitation signal of the first system and the excitation signal of the second system.

On the other hand, for example, microcontrollers that make up the excitation circuit 31a of the first system and the excitation circuit 31b of the second system have manufacturing variations. Therefore, even if design is performed such that the frequencies of the excitation signal of the first system and the excitation signal of the second system are equivalent to one another, there is a possibility that they will not completely coincide with one another and a minute difference will occur. In addition, there is a possibility that the difference between the excitation signal of the first system and the excitation signal of the second system changes with time. In such a case, it is difficult to synchronize the excitation signal of the first system and the excitation signal of the second system.

In such a case, the frequency of the excitation signal of the first system from the excitation circuit 31a of the first system and the frequency of the excitation signal of the second system from the excitation circuit 31b of the second system may be made to be different. Since each of the excitation circuit 31a of the first system and the excitation circuit 31b of the second system is independent, it is possible to make the frequencies of excitation signals from the respective excitation circuits 31a and 31b be different.

In this case, the angle computation unit 32a of the first system performs a removal processing of removing the frequency component of the excitation signal of the second system from the output signals of the first system (the first output signal of the first system and the second output signal of the first system) and only extracts the frequency component of the excitation signal of the first system. The angle computation unit 32b of the second system performs the removal processing of removing the frequency component of the excitation signal of the first system from the output signals of the second system (the first output signal of the second system and the second output signal of the second system) and only extracts the frequency component of the excitation signal of the second system.

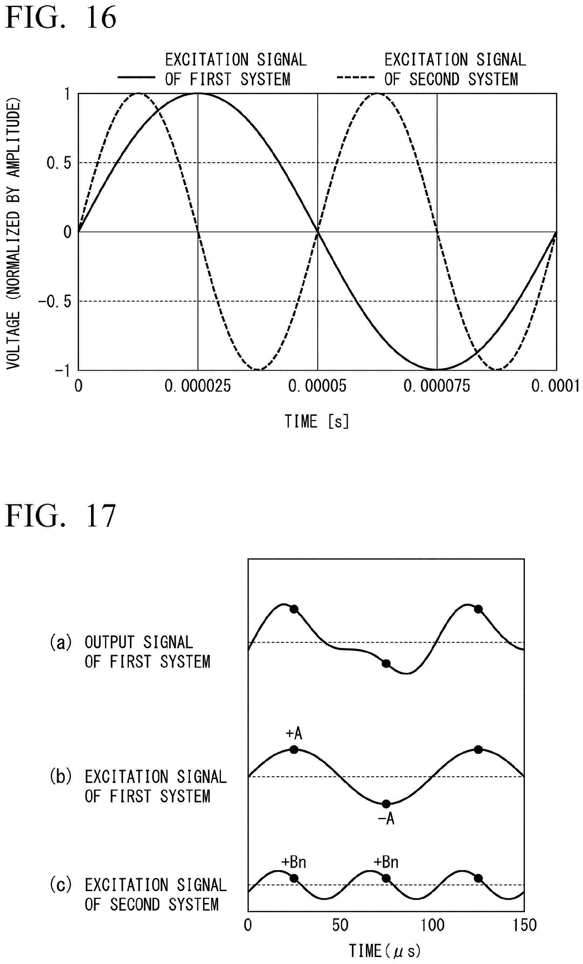

The removal processing is described with reference to FIGs. 16 to 18.

FIG. 16 shows an example of the waveforms of the excitation signal of the first system and the excitation signal of the second system when a frequency of the excitation signal of the first system and a frequency of the excitation signal of the second system are made to be different. In FIG. 16, a frequency f1 of the excitation signal of the first system is 10 kHz, and a frequency f2 of the excitation signal of the second system is 20 kHz. In FIG. 16, the vertical axis indicates the voltages of the excitation signal, which are normalized by an amplitude of the excitation signal. The horizontal axis indicates time.

FIG. 17 is an explanatory view of an influence of the excitation signal of the second system on an output signal of the first system when the excitation signal shown in FIG. 16 is used. In FIG. 17, part (a) shows a waveform of an output signal of the first system, part (b) shows a waveform of the excitation signal of the first system, and part (c) shows a waveform of the excitation signal of the second system.

As shown in the part (b) in FIG. 17, the excitation signal of the first system when the excitation signal of the first system is at a positive peak becomes a positive A, and the excitation signal of the first system when the excitation signal of the first system is at a negative peak becomes a negative A. As shown in the part (c) in FIG. 17, the excitation signal of the second system when the excitation signal of the first system is at the positive peak becomes a positive Bn, and the excitation signal of the second system when the excitation signal of the first system is at the negative peak becomes a positive Bn.

It is typically preferable that an output signal of the first system have a waveform of the frequency f1 that corresponds to the excitation signal of the first system. However, as shown in the part (a) in FIG. 17, an actual output signal of the first system is affected by the excitation signal of the second system and has a waveform to which a frequency component of the excitation signal of the second system is added. Specifically, in an output signal of the first system when the excitation signal of the first system is at the positive peak, the excitation signal component (the positive Bn) of the second system is added to the excitation signal component (the positive A) of the first system. In an output signal of the first system when the excitation signal of the first system is at the negative peak, the excitation signal component (the positive Bn) of the second system is added to the excitation signal component (the negative A) of the first system. As a result, an output signal of the first system has a waveform that distorts from a sinusoidal wave.

If such an output signal of the first system is sampled in a cycle of 1/f1 and an arc tangent computation is performed without any changes, an error caused by the frequency component of the excitation signal of the second system occurs in the detection angle computed by the angle computation unit 32a of the first system.

Here, the angle computation unit 32a of the first system performs the removal processing of removing the frequency component of the excitation signal of the second system from the output signals of the first system. Specifically, the angle computation unit 32a of the first system samples an output signal of the first system at 2/f1 and obtains a value of {(A+Bn1)-(-A+Bn2)}/2. Accordingly, it is possible to remove the frequency component (Bn) of the excitation signal of the second system from an output signal of the first system, where it becomes possible to only extract the frequency component (A) of the excitation signal of the first system.

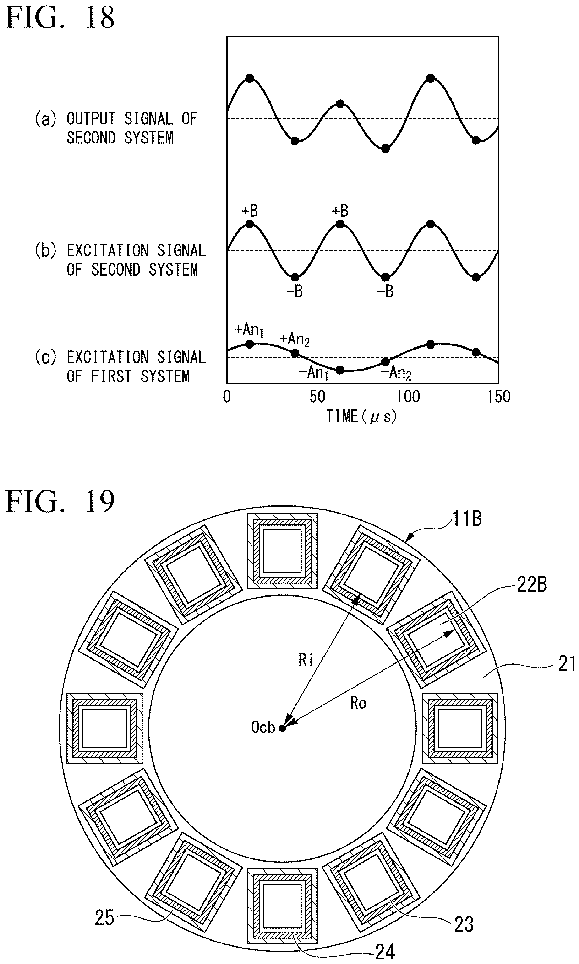

FIG. 18 is an explanatory view of an influence of the excitation signal of the first system on an output signal of the second system when the excitation signal shown in FIG. 16 is used. In FIG. 18, part (a) shows a waveform of an output signal of the second system, part (b) shows a waveform of the excitation signal of the second system, and part (c) shows a waveform of the excitation signal of the first system.

As shown in the part (b) in FIG. 18, the excitation signal of the first system when the excitation signal of the second system is at the positive peak becomes the positive B, and the excitation signal of the first system when the excitation signal of the second system is at the negative peak becomes the negative B. As shown in the part (c) in FIG. 18, in the excitation signal of the first system when the excitation signal of the second system is at the positive peak, a positive Ani and a negative Ani alternately repeat, and in an excitation signal of the first system when the excitation signal of the second system is at the negative peak, a positive $An_2$ and a negative $An_2$ alternately repeat.

It is typically preferable that the output signal of the second system have a waveform of the frequency f2 that corresponds to the excitation signal of the second system. However, as shown in the part (a) in FIG. 18, an actual output signal of the second system is affected by the excitation signal of the first system and has a waveform to which a frequency component of the excitation signal of the first system is added. Specifically, in an output signal of the second system when the excitation signal of the second system is at the positive peak, the excitation signal components (the positive $An_1$) of the first system of the excitation signal components (the negative Am) of the first system are alternately added to the excitation signal components (the positive B) of the second system. In the output signal of the second system when the excitation signal of the second system is at the negative peak, the excitation signal components (positive $An_2$) of the first system or the excitation signal components (negative $An_2$) of the first system are alternately added to the excitation signal components (the negative B) of the second system. As a result, the output signal of the second system has a waveform that distorts from a sinusoidal wave.

If such an output signal of the second system is sampled in a cycle of 1/f2 and the arc tangent computation is performed without any changes, an error caused by the frequency component of the excitation signal of the first system occurs in the detection angle computed by the angle computation unit 32b of the second system.

The angle computation unit 32b of the second system performs the removal processing of removing the frequency component of the excitation signal of the first system from the output signals of the second system. Specifically, the angle computation unit 32b of the second system samples an output signal of the second system at 2/f2 and obtains a value of $\{(B+An_1)+(B-An_1)-(-B+An_2)-(-B-An_2)\}/4$. Accordingly, it is possible to remove the frequency component (Am, $An_2$) of the excitation signal of the first system from an output signal of the second system, making it possible to only extract the frequency component (B) of the excitation signal of the second system.

As in the above, in the resolver 100 according to the second embodiment, the excitation circuit 31a of the first system and the excitation circuit 31b of the second system may output excitation signals having different frequencies.

In this case, the angle computation unit 32a of the first system performs the removal processing of removing the frequency component of the excitation signal of the second system from the output signals of the first system. The angle computation unit 32b of the second system performs the removal processing of removing the frequency component of the excitation signal of the first system from the output signals of the second system. Accordingly, it is possible for the angle computation units 32a and 32b to compute the rotation angle of the rotor 12 without being affected by the excitation signal of the other system. Therefore, the accuracy of detecting the rotation angle is further improved.

Third Embodiment

FIG. 19 is a view showing a stator 11B according to a third embodiment. The same reference signs are applied to configuring components having functions and operations similar to those of the first embodiment, and explanations thereof are omitted.

As shown in FIG. 19, in the third embodiment, each of teeth 22B of the stator 11B is formed into a rectangular shape when viewed from the axial direction. Specifically, the teeth 22B are formed into a rectangular shape, where a minimum distance from a center Ocb of the core back 21 is Ri and a maximum distance from the center Ocb is Ro.

In the third embodiment, since the teeth 22B have a rectangular shape, winding work of the teeth 22B is facilitated, and it is possible to improve manufacturability.

Fourth Embodiment

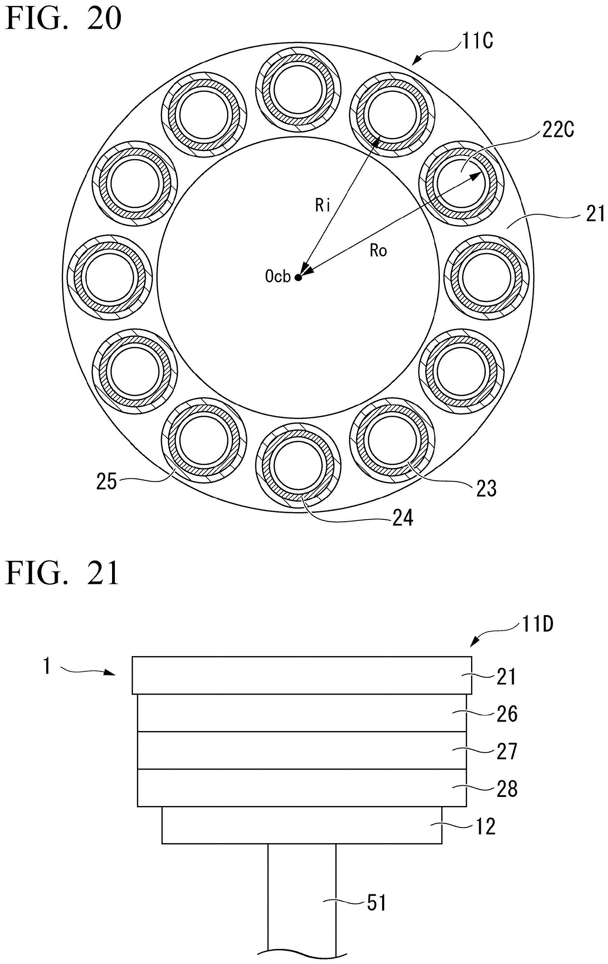

FIG. 20 is a view showing a stator 11C according to a fourth embodiment. The same reference signs are applied to configuring components having functions and operations similar to those of the first embodiment, and explanations thereof are omitted.

As shown in FIG. 20, in the fourth embodiment, each of teeth 22C of the stator 11C is formed into a circular shape when viewed from the axial direction. Specifically, the teeth 22C are formed into a circular shape in which a minimum distance from the center Ocb of the core back is Ri and a maximum distance from the center Ocb is Ro.

In the fourth embodiment, since the teeth 22C have a circular shape, winding work of the teeth 22C is facilitated, and it is possible to improve manufacturability.

Fifth Embodiment

FIG. 21 is a side view of the resolver main body 1 according to a fifth embodiment. The same reference signs are applied to configuring components having functions and operations similar to those of the first embodiment, and explanations thereof are omitted.

As shown in FIG. 21, in the fifth embodiment, a stator 11D includes the core back 21, a plurality of teeth 22 (not shown in FIG. 21), an excitation winding board 26 having the excitation winding 23, a first output winding board 27 having the first output winding 24, and a second output winding board 28 having the second output winding 25. That is, in the fifth embodiment, the excitation winding 23, the first output winding 24, and the second output winding 25 are configured of board coils.

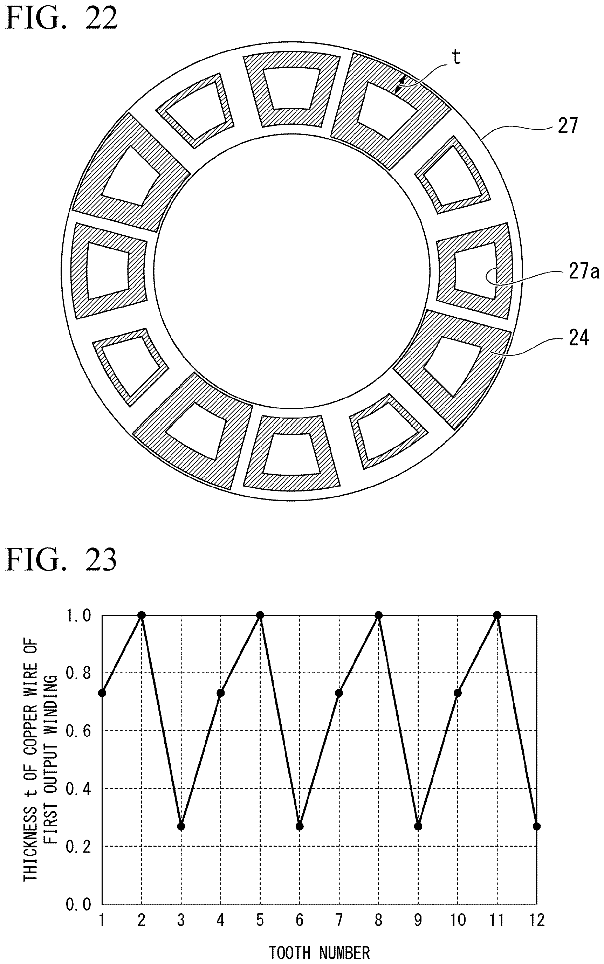

With reference to FIG. 22, a configuration of the first output winding board 27 is described. The excitation winding board 26 and the second output winding board 28 also have a configuration similar to the configuration of the first output winding board 27.

As shown in FIG. 22, a plurality of penetration holes 27a through which the plurality of teeth 22 are respectively inserted, are formed in the first output winding board 27. The penetration holes 27a have shapes that correspond to those of the teeth 22. The penetration holes 27a are formed at positions that correspond to the teeth 22.

The first output winding 24 configured of a patterned copper wire is provided on the first output winding board 27. The first output winding 24 is provided in a manner that surrounds the penetration holes 27a.

FIG. 23 shows a distribution of thicknesses t of the copper wires of the first output windings 24. That is, FIG. 23 consecutively shows the thicknesses t of the copper wires of the first output windings 24 disposed on the teeth T1 to T12. In FIG. 23, the vertical axis indicates the thicknesses t of the copper wires of the first output windings 24, which are normalized by the maximum value. The horizontal axis indicates the number i of the tooth Ti.

As shown in FIG. 23, the thickness t of the copper wire of the first output winding 24 differs for each tooth Ti. Accordingly, the resistance of the first output winding 24 differs for each of the teeth 22 (the tooth Ti). In addition, in the fifth embodiment, similar to the first embodiment, the spatial order Ne of the excitation windings 23 is six, the axial double angle Nx of the rotor 12 is four, and the spatial orders of the output windings 24 and 25 is two. Therefore, a connection direction of the first output windings 24 with respect to the teeth T4 to T6 and the teeth T10 to T12 and a connection direction of the output windings 24 and 25 in the teeth T1 to T3 and the teeth T7 to T9 become directions that are opposite to one another. Accordingly, the spatial order of the distribution of the resistance of the first output winding 24 becomes two. Although the spatial order of the distribution of the resistance of the first output winding 24 is set to two, the present disclosure is not limited as such.

In FIG. 23, the thickness t of the copper wire of the first output winding 24 is shown, and the same applies to the second output winding 25.

In the fifth embodiment, the excitation winding 23, the first output winding 24, and the second output winding 25 are configured of board coils. Accordingly, while an accuracy of detecting a rotation angle is maintained, it is possible to reduce a dimension of the resolver 100 in the axial direction so that it is possible to make the resolver 100 thinner. Also, it is also possible to improve an ease of assembly of the resolver 100.

In the fifth embodiment, although an example in which the excitation winding board 26, the first output winding board 27, and the second output winding board 28 are configured of different boards is described, the present disclosure however, is not limited to the above. All or any two of the excitation winding board 26, the first output winding board 27, and the second output winding board 28 may be configured of the same board.

In addition, in the fifth embodiment, although an example in which the excitation winding 23, the first output winding 24, and the second output winding 25 are configured of board coils is shown, the present disclosure however, is not limited to the above. The excitation winding 23, the first output winding 24, and the second output winding 25 may be configured of sheet coils. In this case, it is possible to further make the resolver 100 thinner.

Sixth Embodiment

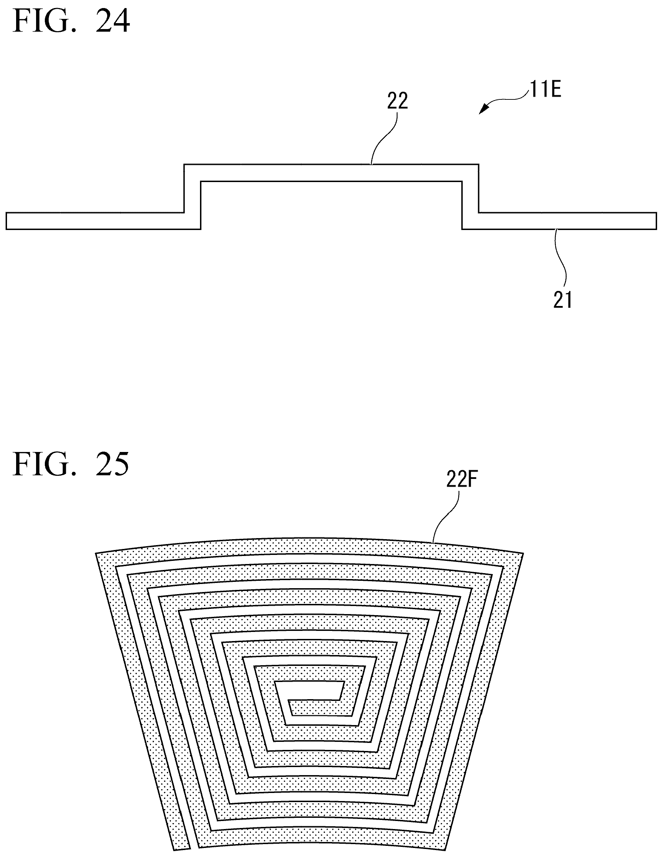

FIG. 24 is a cross-sectional view taken along a line C-C of FIG. 5, and shows a stator 11E according to a sixth embodiment. FIG. 24 only shows the iron core (the core back 21 and the teeth 22) of the stator 11E, and the excitation winding 23, the first output winding 24, and the second output winding 25 are omitted. The same reference signs are applied to configuring components having functions and operations similar to those of the first embodiment, and explanations thereof are omitted.

In the sixth embodiment, the core back 21 and a plurality of teeth 22 are formed by performing pressing of a plate made of a single magnetic body using a mold. Due to such a configuration, manufacturability of the resolver 100

14

is improved, and it is possible to reduce costs.

Seventh Embodiment

FIG. 25 shows a tooth 22F according to a seventh embodiment. The same reference signs are applied to configuring components having functions and operations similar to those of the first embodiment, and explanations thereof are omitted.

In the seventh embodiment, the tooth 22F is formed by bending a plate made of a single magnetic body. Due to such a configuration, it is possible to reduce eddy current losses generated in the tooth 22F when the rotor 12 rotates. Therefore, the amounts of the first and second output signals obtained from the first output windings 24 and the second output windings 25 increase so that it is possible to improve noise resistance.

Eighth Embodiment

In an eighth embodiment, the resolver main body 1 of the resolver 100 is disposed between the rotating body of the rotary electric machine 50 and a bearing that holds the shaft 51 of the rotating body of the rotary electric machine 50. Due to such disposition, an attachment position of the resolver main body 1 is unlikely to deviate, and thus an accuracy of detecting a rotation angle by the resolver 100 is further improved.

Ninth Embodiment

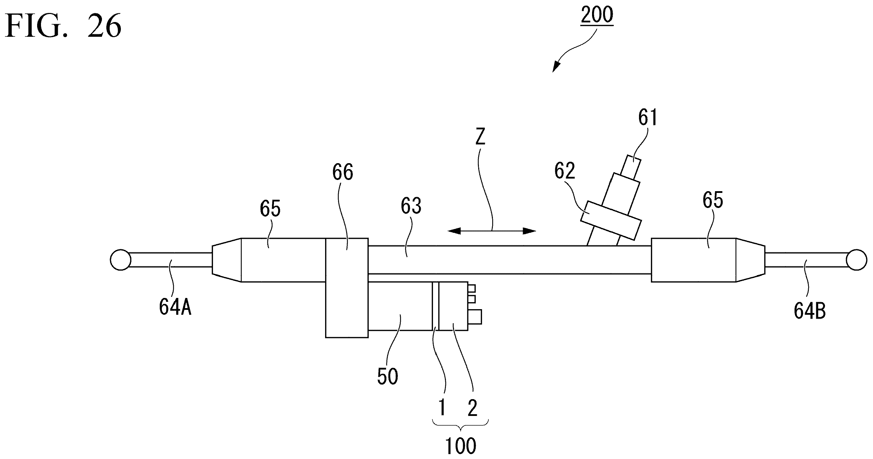

It is possible to apply the resolver 100 according to the first to the eighth embodiments to an electric power steering device of a vehicle. Hereinafter, an electric power steering device 200 according to a ninth embodiment is explained using FIG. 26. The same reference signs are applied to configuring components having functions and operations similar to those of the first embodiment, and explanations thereof are omitted.

FIG. 26 is a schematic diagram of the electric power steering device 200 with which a vehicle such as an automobile is equipped. The electric power steering device 200 includes the resolver 100, the rotary electric machine 50, a wheel shaft 61, a torque sensor 62, a housing 63, a right front wheel tie rod 64A, a left front wheel tie rod 64B, rack boots 65, and a gear box 66.

A steering wheel (not shown) operated by a driver is coupled to one end of the wheel shaft 61. The driver steers the steering wheel, and a torque thereof is transferred to the wheel shaft 61. The torque sensor 62 is attached to the wheel shaft 61. If the driver steers the steering wheel, the torque is detected by the torque sensor 62.

A rack shaft (not shown) is inserted through the housing 63. The wheel shaft 61 is coupled to the rack shaft. The right front wheel tie rod 64A and the left front wheel tie rod 64B are respectively coupled to both ends of the rack shaft. A right wheel (not shown) is coupled to the right front wheel tie rod 64A through a knuckle arm (not shown). A left wheel (not shown) is coupled to the left front wheel tie rod 64B through the knuckle arm (not shown). The left and right front wheels are steered in response to an operation of the steering wheel of the driver. To prevent any foreign object inclusion into the electric power steering device 200, both end portions of the housing 63 are covered by the rack boots 65.

The electric power steering device 200 assists the driver in performing operations of the steering wheel. The assistance is performed, when the driver steers the steering wheel and a steering torque is generated, by generating an auxiliary torque to assist the steering torque. The auxiliary torque is generated using the rotary electric machine 50 as a power source. For example, the rotary electric machine 50 is a permanent magnet-type rotary electric machine.

When the driver steers the steering wheel, torque is detected by the torque sensor 62. The detected torque is transferred to a first system power supply source and a second system power supply source (not shown). In addition, vehicle information, such as a vehicle speed, is also converted into an electrical signal and transferred to the first system power supply source and the second system power supply source. The first system power supply source and the second system power supply source compute the auxiliary torque required to assist the operation from the vehicle information, such as a torque and a vehicle speed detected by the torque sensor 62. The first system power supply source and the second system power supply source supply a current that corresponds to the computed auxiliary torque to the rotary electric machine 50 through a control device (inverter) of the rotary electric machine 50.

The rotary electric machine 50 is disposed in a direction parallel to a movement direction (arrow Z) of the rack shaft inserted through the housing 63. A torque generated in the rotary electric machine 50 is transferred to a belt and a ball screw (not shown) inside the gear box 66 and generates a thrust for moving the rack shaft inserted through the housing 63 in the direction of the arrow Z. Due to the thrust, a steering force of the driver is assisted. Due to the thrust of the rotary electric machine 50 and a steering force of the driver, the right front wheel tie rod 64A and the left front wheel tie rod 64B operate so that both wheels are steered in a different direction and it is possible to have the vehicle turn. In this manner, since an operation of the driver is assisted by the torque of the rotary electric machine 50, the driver can turn the vehicle with minimal steering force.

In the electric power steering device 200 according to the ninth embodiment, any resolver 100 of the foregoing first to eighth embodiments is applied for detecting the rotation angle of the rotating body of the rotary electric machine 50. In the electric power steering device 200, a cogging torque and a torque ripple generated by the rotary electric machine 50 are transmitted to the driver through the gears. Therefore, it is desirable to have a smaller cogging torque and torque ripple in order to achieve favorable steering feel. In addition, it is also desirable that vibration and noise during the operation of the rotary electric machine 50 are small. It is possible to smoothly control the rotary electric machine 50 by accurately detecting the rotation angle of the rotating body of the rotary electric machine 50 using the resolver 100, making it is possible to curb the occurrence of a torque ripple compared to when the accuracy of detecting the rotation angle is low. Similarly, occurrence of vibration and noise can also be curbed. Therefore, it is possible for the electric power steering device 200 according to the ninth embodiment in which the rotary electric machine 50 is equipped with any one of the resolver 100 of the foregoing first to eighth embodiments to provide favorable steering feel to the driver.

Although FIG. 26 shows an example in which both the resolver main body 1 and the control device 2 are attached to the rotary electric machine 50, the present disclosure however, is not limited to the above. Only the resolver main body 1 may be attached to the rotary electric machine 50, and the control device 2 may be provided outside the rotary electric machine 50.

It is possible to combine the embodiments, and it is possible to suitably modify or omit each of the embodiments.

For example, in the foregoing embodiments, although the excitation winding 23, the first output winding 24, and the second output winding 25 are wound around the teeth 22, the present disclosure however, is not limited to the above. The teeth 22 around which any of one-phase output winding of the two-phase output windings 24 and 25 is not wound may be provided.

[Reference Signs List]

    1...Resolver Main Body
    2...Control Device
    11, 11A, 11B, 11C, 11D, 11E...Stator
    12... Rotor
    12a...Salient Pole
    21...Core Back
    22, 22B, 22C, 22F... Teeth
    23, 23a, 23b...Excitation Winding
    24, 24a, 24b...First Output Winding
    25, 25a, 25b...Second Output Winding
    31, 31a, 31b...Excitation Circuit
    32, 32a, 32b...Angle Computation Unit
    50... Rotary Electric Machine
    51...Shaft
    100...Resolver
    200...Electric Power Steering Device

**Claims**

1. A resolver comprising:

   a rotor that is made of a magnetic body and is attached to a shaft of a rotating body, the rotor having a plurality of salient poles disposed in a circumferential direction;
   a stator which faces the rotor in an axial direction, the stator having an annular core back, a plurality of teeth that are made of a magnetic body and protrude from the core back towards the rotor, and an excitation winding and two-phase output windings that are wound around the plurality of teeth, the plurality of teeth being disposed in the circumferential direction;
   an excitation circuit that is configured to supply an excitation signal to the excitation winding; and
   an angle computation unit to which output signals from the two-phase output windings are input and which is configured to compute a rotation angle of the rotor based on the output signals, wherein
   each of the plurality of teeth is formed having line-symmetry with respect to a line connecting a center of the core back and centers of the teeth in the circumferential direction when viewed from the axial direction, and

an outline of the rotor is expressed by a function Rr(x($\theta$), y($\theta$)) defined by the following Equations (1) to (3), where an x axis and a y axis are axes of an orthogonal coordinate system having a center of the shaft set as an origin, and an angle from a reference axis is $\theta$,

[Math. 1]

$$x(\theta) = k_1(R_o - R_i)\sin\theta + k_2(R_o - R_i)\cos N_x\theta\cos\theta \quad \cdots \quad (1)$$
$$y(\theta) = k_1(R_o - R_i)\sin\theta + k_2(R_o - R_i)\cos N_x\theta\sin\theta \quad \cdots \quad (2)$$
$$k_1 + k_2 \leqq 1 \quad \cdots \quad (3)$$

here, Ri is a minimum distance from the center of the core back to the teeth, Ro is a maximum distance from the center of the core back to the teeth, Nx is the number of salient poles, and $k_1$ and $k_2$ are positive numbers.

2. The resolver according to claim 1, wherein
the outline of the rotor is formed such that $k_1+k_2<1$ is satisfied.

3. The resolver according to claim 1 of 2, wherein
each of the plurality of teeth is formed into an arc shape having an inner circumferential surface that is an arc with the radius Ri with the core back as the center, and an outer circumferential surface that is an arc with the radius Ro with the core back as the center when viewed from the axial direction.

4. The resolver according to claim 1 or 2, wherein
each of the plurality of teeth is formed into a rectangular shape in which the minimum distance from the center of the core back is Ri and the maximum distance from the center of the core back is Ro when viewed from the axial direction.

5. The resolver according to claim 1 or 2, wherein
each of the plurality of teeth is formed into a circular shape in which the minimum distance from the center of the core back is Ri and the maximum distance from the center of the core back is Ro when viewed from the axial direction.

6. The resolver according to any one of claims 1 to 5, wherein
the excitation winding and the two-phase output windings are configured of coils.

7. The resolver according to any one of claims 1 to 5, wherein
the excitation winding and the two-phase output windings are configured of board coils.

8. The resolver according to any one of claims 1 to 5, wherein
the excitation winding and the two-phase output windings are configured of sheet coils.

9. The resolver according to any one of claims 1 to 8, wherein
the core back is made of a magnetic body.

10. The resolver according to any one of claims 1 to 9, wherein

the plurality of teeth are split in the circumferential direction and configure a teeth group of a first system and a teeth group of a second system,
the excitation circuit has an excitation circuit of the first system that corresponds to the teeth group of the first system, and an excitation circuit of the second system that corresponds to the teeth group of the second system,
the angle computation unit has an angle computation unit of the first system that corresponds to the teeth group of the first system and an angle computation unit of the second system that corresponds to the teeth group of the second system, and
the excitation circuit of the first system and the angle computation unit of the first system, and the excitation circuit of the second system and the angle computation unit of the second system are provided independently from one another.

11. The resolver according to claim 10, wherein
the excitation circuit of the first system and the excitation circuit of the second system output excitation signals having different frequencies.

12. The resolver according to claim 11, wherein

the angle computation unit of the first system performs removal processing of removing a frequency component of the excitation signal, which is supplied to the excitation circuit of the second system, from the output signal input to the angle computation unit of the first system, and
the angle computation unit of the second system performs removal processing of removing a frequency component of the excitation signal, which is supplied to the excitation circuit of the first system, from the output signal input to the angle computation unit of the second system.

13. The resolver according to any one of claims 1 to 12, wherein
the stator and the rotor are disposed between the rotating body and a bearing that holds the shaft of the rotating body.

14. An electric power steering device comprising:

a rotary electric machine for generating an auxiliary torque to assist a steering torque of a vehicle; and
the resolver according to any one of claims 1 to 13.

# FIG. 1

# FIG. 2

FIG. 3

FIG. 4

FIG. 5

## FIG. 6

## FIG. 7

FIG. 8

FIG. 9A

FIG. 9B

FIG. 10

FIG. 11

FIG. 12

<u>100</u>

FIRST SYSTEM · · · · · · 2a

24a — FIRST OUTPUT WINDING

25a — SECOND OUTPUT WINDING

23a — EXCITATION WINDING   +   −

ANGLE COMPUTATION UNIT — 32a

EXCITATION CIRCUIT — 31a

SECOND SYSTEM · · · · · · 2b

24b — FIRST OUTPUT WINDING

25b — SECOND OUTPUT WINDING

23b — EXCITATION WINDING   +   −

ANGLE COMPUTATION UNIT — 32b

EXCITATION CIRCUIT — 31b

FIG. 13

FIG. 14

PHASE DIFFERENCE BETWEEN EXCITATION SIGNALS [deg]

FIG. 15

PHASE DIFFERENCE BETWEEN EXCITATION SIGNALS [deg]

# FIG. 16

EXCITATION SIGNAL
—— OF FIRST SYSTEM

EXCITATION SIGNAL
----- OF SECOND SYSTEM

# FIG. 17

(a) OUTPUT SIGNAL
    OF FIRST SYSTEM

(b) EXCITATION SIGNAL
    OF FIRST SYSTEM

(c) EXCITATION SIGNAL
    OF SECOND SYSTEM

TIME($\mu$s)

# FIG. 18

(a) OUTPUT SIGNAL OF SECOND SYSTEM

(b) EXCITATION SIGNAL OF SECOND SYSTEM

+B    +B    +B

−B    −B

(c) EXCITATION SIGNAL OF FIRST SYSTEM

+An$_1$  +An$_2$

−An$_1$    −An$_2$

0          50          100          150

TIME(μs)

# FIG. 19

11B

22B

21

Ri

Ro

Ocb

25          23

24

FIG. 20

FIG. 21

# FIG. 22

# FIG. 23

EP 4 325 173 A1

FIG. 24

FIG. 25

FIG. 26

EP 4 325 173 A1

# INTERNATIONAL SEARCH REPORT

| | International application No. |
|---|---|
| | PCT/JP2021/015561 |

### A. CLASSIFICATION OF SUBJECT MATTER

G01D 5/20(2006.01)i
FI: G01D5/20 110D

According to International Patent Classification (IPC) or to both national classification and IPC

### B. FIELDS SEARCHED

Minimum documentation searched (classification system followed by classification symbols)

G01D5/00-5/62, G01B7/30

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 2020/0088549 A1 (KSR IP HOLDINGS, LLC) 19 March 2020 (2020-03-19) entire text, all drawings | 1-14 |
| A | JP 2007-171131 A (TOYOTA MOTOR CORP) 05 July 2007 (2007-07-05) entire text, all drawings | 1-14 |
| A | JP 2009-128312 A (SUMIDA CORPORATION) 11 June 2009 (2009-06-11) entire text, all drawings | 1-14 |
| A | WO 2020/240616 A1 (MITSUBISHI ELECTRIC CORP) 03 December 2020 (2020-12-03) entire text, all drawings | 1-14 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 May 2021 (14.05.2021) | 25 May 2021 (25.05.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/015561

| Patent Documents referred in the Report | Publication Date | Patent Family | Publication Date |
|---|---|---|---|
| US 2020/0088549 A1 | 19 Mar. 2020 | WO 2020/056288 A1 | |
| JP 2007-171131 A | 05 Jul. 2007 | US 2009/0179632 A1 entire text, all drawings WO 2007/074375 A2 EP 1966874 A2 CN 101346873 A | |
| JP 2009-128312 A | 11 Jun. 2009 | (Family: none) | |
| WO 2020/240616 A1 | 03 Dec. 2020 | (Family: none) | |

Form PCT/ISA/210 (patent family annex) (January 2015)

37

**EP 4 325 173 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007171131 A